# FASCICULE DE BREVET EUROPEEN

(11) **EP 0 545 837 B1**
(45) Date de publication et mention de la délivrance du brevet: **21.01.1998**
(21) Numéro de dépôt: 92440132.6
(22) Date de dépôt: 27.11.1992
(51) Int. Cl.: H01B 13/00

(54) **Procédé de fabrication d'un dispositif portant des repères pour marquer des conducteurs**
Herstellungsverfahren für eine Markierungentragende Vorrichtung zum Bezeichnen von Leitern
Manufacturing process for a device carrying marks for marking conductors

(30) Priorité: 06.12.1991 FR 9115324
(43) Date de publication de la demande: 09.06.1993
(73) Titulaire: TECHNIQUES MODERNES ALSACIENNES T.M.A. S.A., 68300 Saint-Louis (FR)
(72) Inventeur: Hess, Marcel, CH-4115 Mariastein (CH)
(74) Mandataire: Nithardt, Roland

(56) Documents cités:
- WO-A-91/03058
- DE-A- 2 655 958
- US-A- 4 581 805
- US-A- 4 882 116

## Description

La présente invention concerne un procédé de fabrication d'un dispositif portant des repères pour marquer des conducteurs électriques ou optiques, ce dispositif comprenant une tige de support en matière synthétique et un ensemble de bagues fendues en matière synthétique montées de manière coulissante sur la tige de support et pourvues de marques de repérage des conducteurs, la tige de support et l'ensemble de bagues étant moulés par injection lors d'étapes respectives distinctes.

Les dispositifs de ce genre sont bien connus et comportent généralement une rangée de bagues fendues toutes identiques, qui sont insérées sur une partie cylindrique d'une tige de support dont une extrémité est évasée et creuse pour s'appliquer latéralement contre un conducteur sur lequel on veut monter une des bagues de repérage. L'autre extrémité de la tige est arrondie ou effilée pour faciliter son insertion dans les bagues lors du montage du dispositif. Cette opération de montage exige beaucoup de travail manuel ou des machines spéciales, capables de traiter des bagues de différents diamètres. De ce fait, le procédé traditionnel pour fabriquer de tels dispositifs est relativement coûteux.

Afin de simplifier ladite opération de montage, la publication DE - B - 2 655 958 décrit un procédé dans lequel toutes les bagues fendues à monter sur une tige sont fabriquées par injection en une seule pièce, les bagues étant alignées et séparées les unes des autres par des intervalles, mais reliées chacune à une barrette longitudinale commune le long d'une ligne de moindre résistance. Ainsi, il est possible de saisir mécaniquement cet ensemble de bagues par la barrette, d'y enfiler la tige de support, puis de casser les liaisons entre la barrette et les bagues de façon que celles-ci deviennent indépendantes les unes des autres. Toutefois ce procédé nécessite quand même une opération d'insertion de la tige dans les bagues et une opération supplémentaire pour détacher les bagues de la barrette. De plus, cette dernière opération laisse des arêtes vives sur les bagues, généralement à leur surface supérieure, ce qui empêche d'appliquer des marques de repérage à cet endroit.

Le brevet US-A-4 581 805 décrit un dispositif comprenant un support allongé de forme cylindrique pourvu de rainures longitudinales et de multiples tiges de support portant des bagues. Les tiges de support ont une forme complémentaire des rainures dans lesquelles elles peuvent coulisser.
Ce dispositif permet de rassembler sur un même support différents modèles de bagues.
Cependant, ce dispositif nécessite de monter les bagues sur les tiges de support de façon classique.
D'autre part, la forme cylindrique du dispositif et des tiges est instable; en effet, quand on pose le dispositif sur un établi, l'ensemble a tendance à rouler, d'où une lecture difficile des bagues.

La présente invention a pour but de remédier aux problèmes évoqués ci-dessus, en créant un dispositif porte-repères dont la fabrication demande moins de manipulations et permet des formes d' exécution avantageuses.

A cet effet, le procédé selon l'invention est caractérisé en ce que les bagues sont moulées par surmoulage sur la tige de support moulée au préalable, et en ce que la matière des bagues a un point de fusion plus bas que celui de la matière de la tige de support, et en ce que ladite matière des bagues est agencée de sorte qu'elle n'adhère pas sur ladite matière de la tige de support. Par conséquent, il n'y a plus d'opération d'insertion de la tige de support dans chacune des bagues, mais simplement l'insertion de cette tige dans le moule des bagues, ce qui peut se faire très facilement sans l'aide d'aucun instrument particulier, quel que soit le diamètre des bagues.

La matière de la tige de support a le point de fusion le plus élevé afin qu'elle ne soit pas déformée lors du surmoulage.

Toutes les bagues dudit ensemble peuvent être moulées simultanément et être séparées par des éléments de moule qui forment des intervalles entre elles.

Un dispositif fabriqué par le procédé selon l'invention, comprenant une tige de support en matière synthétique et un ensemble de bagues fendues en matière synthétique qui sont montées de manière coulissante sur la tige de support et pourvues de marques de repérage des conducteurs, la tige de support et l'ensemble de bagues étant moulés par injection lors d'étapes respectives distinctes, est caractérisé en ce que les bagues sont moulées par surmoulage sur la tige de support moulée au préalable, et en ce que les bagues sont réalisées dans une matière dont le point de fusion est plus bas que celui de la matière de la tige de support et agencée de sorte qu'elle n'adhère pas sur ladite matière de la tige de support.

Toutes les bagues dudit ensemble peuvent être moulées simultanément et être séparées par des éléments de moule qui forment des intervalles entre elles.

Le procédé selon l'invention peut présenter certaines caractéristiques particulièrement avantageuses.

Dans une forme de réalisation préférée, la tige de support comporte une partie supérieure sensiblement cylindrique, portant les bagues, et une partie inférieure formant un socle longitudinal qui présente une face inférieure plate et des rebords latéraux ayant une forme complémentaire d'une rainure en forme de T.

En outre, ledit socle peut comporter une fente longitudinale centrale s'étendant sur la majeure partie de la hauteur du socle à partir de ladite face inférieure plate. Ceci lui donne une élasticité transversale qui facilite sa fixation dans une rainure d'un moule ou d'un support destiné à porter plusieurs de ces dispositifs, notamment lors de l'impression des marques de repérage sur les bagues. Chaque bague peut comporter une surface supérieure plate destinée à recevoir une marque de repérage et disposée parallèlement à ladite face inférieure plate du socle. En outre, le procédé selon l'invention permet de fabriquer des dispositifs dans lesquels les deux extrémités de la tige de support comportent chacune une tête évasée pour écarter une bague lors de son insertion sur un conducteur.

D'autres particularités et avantages de la présente invention apparaîtront dans la description suivante de différents exemples de réalisation, en référence aux dessins annexés dans lesquels :
- la figure 1 est une vue latérale d'une première forme d'un dispositif fabriqué selon l'invention,
- la figure 2 représente la tige de support du dispositif de la figure 1,
- la figure 3 est une vue agrandie en coupe transversale suivant la ligne III-III de la figure 1,
- la figure 4 est une vue en coupe transversale de différents dispositifs selon l'invention, montés sur un support commun,
- la figure 5 est une vue en perspective partiellement coupée montrant un autre type de support pour des dispositifs fabriqué selon l'invention, et
- les figures 6 et 7 sont des vues respectives en élévation et en plan d'une autre forme d'un dispositif réalisé selon la présente invention.

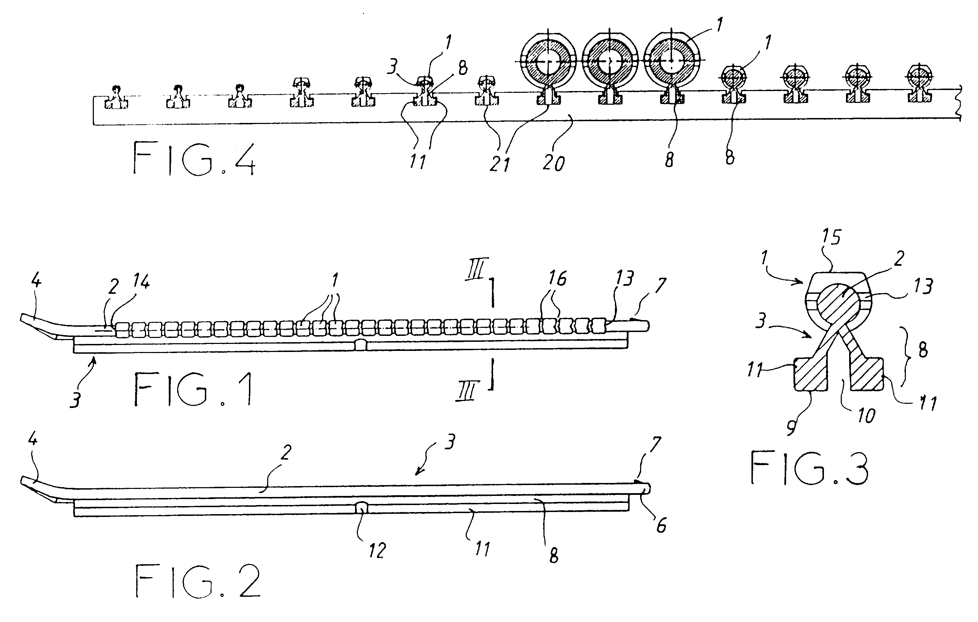

Dans la forme illustrée par les figures 1 à 3, le dispositif porte-repères comprend une rangée de bagues fendues 1 montées sur une partie cylindrique 2 d'une tige de support 3 qui apparaît seule dans la figure 2. La partie cylindrique 2 comporte, à l'une de ses extrémités, une tête coudée 4, évasée et évidée par dessous, pour pouvoir être appliquée contre un conducteur et écarter une bague 1 coulissant sur elle en vue de son insertion sur le conducteur. Des têtes de ce genre sont illustrées par exemple dans les brevets allemands n° 2 655 958 et 3 031 987. De manière connue, l'autre extrémité 6 de la partie cylindrique 2 est droite, pour permettre l'insertion de bagues récupérées, et présente un ergot de retenue 7 ne laissant passer les bagues que dans un sens, c'est-à-dire de droite à gauche dans la disposition représentée.

La tige de support 3 est pourvue d'une partie inférieure 8 qui forme un socle et dont la section transversale apparaît dans la figure 3. Ce socle a une face inférieure plate 9 et est divisé en deux sur la plus grande partie de sa hauteur par une fente longitudinale 10 lui conférant une certaine élasticité transversale. En effet, le socle 8 présente deux rebords latéraux opposés 11 permettant de le fixer par coulissement dans un support, comme on le décrira plus loin. Par ailleurs, la figure 2 montre qu'une encoche latérale 12 est prévue dans chaque rebord 11 pour faciliter le positionnement de la tige 3 tout d'abord dans le moule puis de l'ensemble tige et bagues lors du marquage.

Les bagues fendues 1 portées par la tige 3 peuvent avoir n'importe quelle forme, en particulier une forme normalisée. Dans le cas présent, on voit que leurs deux extrémités ont des profils complémentaires à emboîtement 13 et 14, destinés à empêcher une rotation mutuelle de plusieurs bagues montées les unes contre les autres sur un conducteur. Chaque bague 1 présente avantageusement une surface supérieure plate 15 parallèle à la face inférieure 9 de la tige 3 et destinée à recevoir une marque de repérage A, notamment par impression. Ces marques peuvent être toutes identiques ou différentes sur les bagues 1 montées sur une même tige de support.

La tige de support 3 est moulée par injection et est réalisée en une matière synthétique ayant un point de fusion relativement élevé, par exemple du polycarbonate. Ensuite, cette tige de support est placée dans un moule où les bagues 1 sont formées par surmoulage sur la partie cylindrique 2 de la tige. La matière des bagues 1 est de préférence du polyoxyméthylène qui a un point de fusion nettement inférieur à celui de la matière des tiges 3 et qui n'adhère pas sur celle-ci. Bien entendu, les bagues 1 sont séparées par des éléments qui moulent leurs extrémités. Après démoulage, elles sont donc séparées par des intervalles 16 qui peuvent avantageusement subsister jusqu'à l'utilisation des bagues.

Pour l'opération d'impression, plusieurs des dispositifs selon l'invention peuvent être fixés ensemble sur un support commun 20 du genre illustré par la figure 4. Ce support est pourvu d'une série de rainures parallèles 21 à profil en T renversé, où les socles 8 des tiges sont insérés longitudinalement en étant légèrement comprimés transversalement et retenus par leurs rebords latéraux 11. De la sorte, les bagues 1 sont parfaitement stables pendant l'impression. La figure 4 montre également qu'un support de ce genre peut être utilisé pour le stockage de bagues 1 de différentes tailles, si leurs tiges de support respectives ont des socles 8 semblables.

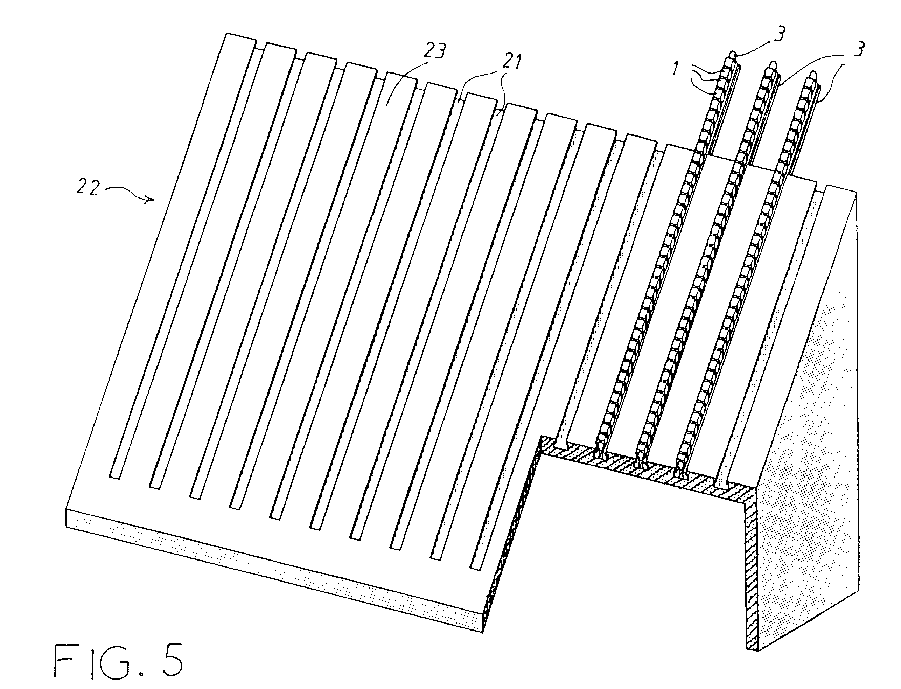

Ainsi, un utilisateur pourra ranger un assortiment de différents types de bagues 1 sur un support ou présentoir 22 tel que le montre la figure 5, comportant un plateau incliné 23 pourvu de plusieurs rainures parallèles 21 ouvertes à une extrémité.

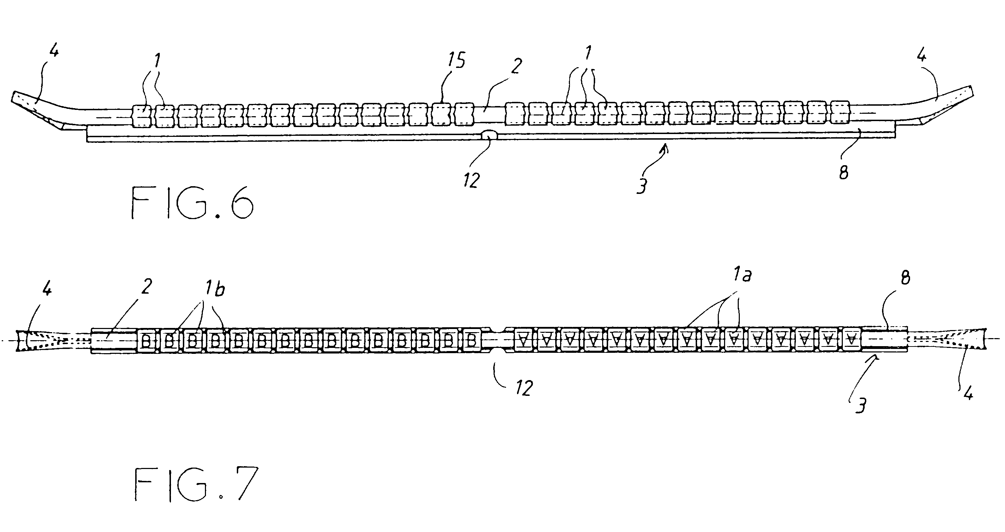

Les figures 6 et 7 illustrent une forme de réalisation dans laquelle chaque extrémité de la partie cylindrique 2 de la tige de support 3 est pourvue d'une tête évasée 4 pour l'application des bagues 1 sur les conducteurs. Les bagues respectivement 1a et 1b peuvent être toutes identiques ou différentes, mais réparties en deux groupes inversés, comme le montre la figure 7, de sorte qu'un utilisateur peut se servir indifféremment d'une tête 4 ou de l'autre et donc travailler plus rapidement qu'avec un dispositif à une seule tête. En outre, le fait de pouvoir disposer de deux séries de bagues différentes constitue un avantage indéniable.

Dans une autre exécution, on peut prévoir que les deux groupes de bagues 1 sont différents, ce qui réduit le nombre de tiges de support dont un utilisateur doit disposer à un moment donné.

## Revendications

1. Procédé de fabrication d'un dispositif portant des repères pour marquer des conducteurs électriques ou optiques, ce dispositif comprenant une tige de support (3) en matière synthétique et un ensemble de bagues fendues (1) en matière synthétique qui sont montées de manière coulissante sur la tige de support et pourvues de marques (A) de repérage des conducteurs, la tige de support et l'ensemble de bagues étant moulés par injection lors d'étapes respectives distinctes, caractérisé en ce que les bagues (1) sont moulées par surmoulage sur la tige de support (3) moulée au préalable, et en ce que la matière des bagues a un point de fusion plus bas que celui de la matière de la tige de support et en ce que ladite matière des bagues est agencée de sorte qu'elle n'adhère pas sur ladite matière de la tige de support.

2. Procédé selon la revendication 1, caractérisé en ce que toutes les bagues (1) dudit ensemble sont moulées simultanément et sont séparées par des éléments de moule qui forment des intervalles (16) entre elles.

3. Procédé selon la revendication 1 caractérisé en ce que la tige de support comporte une partie supérieure sensiblement cylindrique (2) portant les bagues, et une partie inférieure formant un socle longitudinal (8) qui présente une face inférieure plate (9) et des rebords latéraux (11) ayant une forme complémentaire d'une rainure en forme de T.

4. Procédé selon la revendication 3, caractérisé en ce que ledit socle comporte une fente longitudinale centrale (10) s'étendant sur la majeure partie de la hauteur du socle (8) à partir de ladite face inférieure plate (9).

5. Procédé selon la revendication 3 ou 4, caractérisé en ce que chaque bague (1) comporte une surface supérieure plate (15) destinée à recevoir une marque de repérage et disposée parallèlement à ladite face inférieure plate (9) du socle.

6. Procédé selon la revendication 1, caractérisé en ce que les deux extrémités de la tige de support (3) comportent chacune une tête évasée (4) agencée pour écarter une bague lors de son insertion sur un conducteur.

## Claims

1. Process for manufacturing a device bearing marks to mark electric or optical conductors, said device comprising a supporting rod (3) in synthetic material and a set of split rings (1) in synthetic material which are mounted in a sliding manner on the supporting rod and provided with marks (A) for identifying the conductors, the supporting rod and the set of rings being injection-moulded during distinct respective stages, characterised in that the rings (1) are moulded by duplicate moulding on the previously moulded supporting rod (3), and in that material of the rings has a lower melting point than that of the material of the supporting rod and in that said material of the rings is designed so that it does not stick to said material of the supporting rod.

2. Process according to claim 1, characterised in that all the rings (1) of said set are moulded simultaneously and are separated by mould elements which form gaps (16) between them.

3. Process according to claim 1, characterised in that the supporting rod comprises a substantially cylindrical upper part (2) carrying the rings, and a lower part forming a longitudinal base (8) which presents a flat lower surface (9) and lateral edges (11) in the complementary shape of a T-shaped groove.

4. Process according to claim 3, characterised in that said base comprises a central longitudinal slot (10) extending over the greater part of the height of the base (8) from said flat lower surface (9).

5. Process according to claim 3 or 4, characterised in that each ring (1) comprises a flat upper surface (15) designed to receive an identification mark and arranged parallel to said flat lower surface (9) of the base.

6. Process according to claim 1, characterised in that both ends of the supporting rod (3) both comprise a flared head designed to open the ring when it is inserted on a conductor.

## Patentansprüche

1. Herstellungsverfahren für eine Markierungentragende Vorrichtung zum Bezeichnen von optischen und elektrischen Leitern, wobei diese Einrichtung aus einem Trägerstift (3) aus Kunststoff und einem Satz geschlitzter Ringe (1) aus Kunststoff besteht, die verschiebbar auf den Trägerstift montiert werden und mit Leitermarkierungszeichen (A) versehen sind, wobei der Trägerstift und der Ring-Satz durch ein Spritzgießverfahren in unterschiedlichen entsprechenden Herstellungsphasen hergestellt werden, gekennzeichnet dadurch, daß die Ringe (1) auf den vorher geformten Trägerstift (3) aufgegossen werden und daß der Ringwerkstoff einen niedrigeren Schmelzpunkt als der Trägerstiftwerkstoff besitzt, sowie daß der erwähnte Ringwerkstoff angeordnet ist um ein Haften auf dem erwähnten Trägerstiftwerkstoff zu verhindern.

2. Verfahren gemäß Anforderung 1, gekennzeichnet dadurch, daß alle Ringe (1) des besagten Satzes gleichzeitig gespritzt und durch Formelemente voneinander getrennt werden, die Abstände (16) zwischen den Ringen entstehen lassen.

3. Verfahren gemäß Anforderung 1, gekennzeichnet dadurch, daß der Trägerstift einen merklich zylinderförmigen, die Ringe aufnehmender Oberteil (2) und einen einen Längssockel (8) bildender Unterteil besitzt, der eine flache Unterseite (9) und Seitenkanten (11) mit einer ergänzenden Form einer T-Einkerbung aufweist.

4. Verfahren gemäß Anforderung 3, gekennzeichnet dadurch, daß der besagte Sockel einen mittig verlaufenden Längsschlitz (10) aufweist, der sich über den größten Teil der Sockelhöhe (8) ab der besagten flachen Unterseite (9) ausdehnt.

5. Verfahren gemäß Anforderung 3 oder 4, gekennzeichnet dadurch, daß jeder Ring (1) eine flache Oberseite (15) besitzt, die zur Aufnahme eines Markierungszeichens dient und parallel zur erwähnten flachen Sockelunterseite (9) angeordnet ist.

6. Verfahren gemäß Anforderung 1, gekennzeichnet dadurch, daß jedes der beiden Endstücke des Trägerstiftes (3) einen ausgeweiteten Kopf (4) besitzt. der dazu dient, einen Ring bei seiner Einführung auf dem Leiter aufzuspreizen.
